# EUROPÄISCHE PATENTSCHRIFT

(11) **EP 2 280 196 B1**
(45) Veröffentlichungstag und Bekanntmachung des Hinweises auf die Patenterteilung: **21.10.2015**
(21) Anmeldenummer: 10006388.2
(22) Anmeldetag: 19.06.2010
(51) Int. Cl.: F16H 61/40, F16H 61/4043

(54) **Hydrostatischer Antrieb**
Hydrostatic drive
Entraînement hydrostatique

(30) Priorität: 31.07.2009 DE 102009035571
(43) Veröffentlichungstag der Anmeldung: 02.02.2011
(73) Patentinhaber: Hydac System GmbH, 66280 Sulzbach/Saar (DE)
(72) Erfinder: Honsbein, Rüdiger, 66822 Lebach-Dörsdorf (DE)
(74) Vertreter: Bartels & Partner

(56) Entgegenhaltungen:
- DE-A1- 10 250 903
- DE-A1-102007 027 600
- US-A1- 2006 254 235
- US-B1- 6 360 537
- US-B1- 6 508 328

## Beschreibung

Die Erfindung betrifft einen hydrostatischen Antrieb mit einem geschlossenen Kreislauf, welcher mindestens eine verstellbare, von einem Fahrmotor angetriebene Hydropumpe und mindestens einen Hydromotor, sowie eine erste Arbeitsleitung und eine zweite Arbeitsleitung aufweist. Die erste Arbeitsleitung und die zweite Arbeitsleitung verbinden den Hydromotor mit der Hydropumpe.

Hydrostatische Antriebe, wie sie z.B. in mobilen Arbeitsmaschinen Verwendung finden, bestehen häufig aus einem geschlossenen Kreislauf, welcher aus einer Hydropumpe, einem Hydromotor und zwei sie jeweils verbindenden Arbeitsleitungen gebildet wird. Die beiden Arbeitsleitungen befördern Druckmittel oder Fluide in jeweils entgegengesetzte Richtungen. Die Hydropumpe wird dabei über eine Antriebswelle durch eine Verbrennungskraftmaschine angetrieben. Die Verbrennungskraftmaschine ist häufig als Dieselmotor-Lösung realisiert.

In bestimmten Fahrsituationen kommt es vor, dass statt der Hydropumpe der Hydromotor Druckmittel durch den geschlossenen Kreislauf fördert. Dadurch wird die Hydropumpe mit Druck beaufschlagt und arbeitet als Hydromotor, der sich an der Arbeitsmaschine abstützt. Dabei besteht die Gefahr, dass die der Drehzahl des Fahrmotors oder Verbrennungskraftmaschine entsprechend verfügbare Bremslast überschritten wird. Ist dies der Fall, so erhöht sich die Drehzahl der Verbrennungskraftmaschine. Dann sind Maßnahmen zu ergreifen, um eine unzulässige Drehzahlerhöhung der Verbrennungskraftmaschine, welche gegebenenfalls zu ihrer Zerstörung führen könnte, zu verhindern.

Ein derartiger hydrostatischer Antrieb ist aus der DE 10 2004 062 388 A1 bekannt. Die bekannte Lösung geht davon aus, dass in einer Speisedruckleitung eine von der Drehzahl der Verbrennungskraftmaschine abhängige Fluidmenge gefördert wird. In der Druckleitung wird mit der geförderten Fluidmenge ein Differenzdruckwert und damit eine Drehzahl der Verbrennungskraftmaschine festgelegt, bei deren Überschreitung Fluid oder Druckmittel aus der Arbeitsleitung entnommen wird, in welcher der Hydromotor im Schiebebetrieb, also beispielsweise bei einer Bremsung, Druckmittel fördert. Dadurch wird bewirkt, dass nur ein Teil des von dem Hydromotor in Richtung zu der Hydropumpe hin geförderten Druckmittels über die Hydropumpe gefördert wird. So wird verhindert, dass die Drehzahl der Verbrennungskraftmaschine unzulässig erhöht wird.

Bei dahingehenden Antrieben kann es von Nachteil sein, dass im Schiebebetrieb, also dann, wenn der Hydromotor als Pumpe arbeitet und sich in den Arbeitsleitungen das Druckverhältnis umkehrt, durch den Druckmittelabfluss sich keine oder nur eine geringe Bremsleistung einstellt.

Die DE 101 38 519 A1 beschreibt ein Antriebssystem, welches ebenfalls auf einem geschlossenen Kreislauf basiert, welcher aus einer Hydropumpe, einem Hydromotor und zwei, sie jeweils miteinander verbindenden, Arbeitsleitungen gebildet wird und bei dem durch Verstellung des Schwenkwinkels des Hydromotors eine ausreichende Bremsleistung erzielt wird.

Bei diesem System ergibt sich aus der zur Bremsung benötigten Vergrößerung des Schwenkwinkels des Hydromotors gleichzeitig eine Vergrößerung der im geschlossenen Kreislauf umlaufenden Flüssigkeitsmenge, welche allerdings nicht durch die Speisemenge vollständig ersetzt werden kann. Die Bremsung oder Abbremsung kann jedoch auch durch eine Verringerung des Pumpenschwenkwinkels erreicht werden. Pumpensteuerungen sind in der Regel vorgesteuerte Systeme, wie beispielsweise elektroproportionale Stellvorrichtungen unter Einbezug von Regelmagneten, Servoventilen, elektroproportional gesteuerten Druckminderventilen oder auch rein hydraulisch vorgesteuerten Ansteuerungen.

Aus der US 6 508 328 B1 geht ein Allradantrieb für Motorfahrzeuge hervor. Zwischen einem Vorlauf und einem Rücklauf ist parallel zur Hydropumpe und zum Hydromotor ein Schaltventil geschaltet, das zwischen einer Durchlassstellung und einer Sperrstellung mit gegenläufig zueinander wirkenden Rückschlagventilen schaltbar ist.

Aus der gattungsbildende US 2006/0254235 A1 geht eine Einzugsorgansteuerung für eine landwirtschaftliche Arbeitsmaschine hervor. Die Einzugsorgane werden über wenigstens einen Hydromotor angetrieben und im Hydraulikkreis ist wenigstens eine Schaltventilanordnung zum Unterbrechen oder Freigeben des Hydraulikölschlusses zu dem wenigstens einem Hydromotor zugeordnet. Die Schaltventilanordnung umfasst ein Rückschlagventil um eine Überbrückung des Hydromotors zu ermöglichen, so dass Hydraulikflüssigkeit direkt vom Vorlauf in den Rücklauf übergeleitet werden kann.

Es sind in der Praxis auch hydrostatische Antriebe bekannt, in deren Arbeitsleitungen sich Schaltungen befinden, bestehend aus Ventileinheiten mit einem Entnahmeventil, einem Differenzdruckventil und einem Rückschlagventil, um dergestalt eine Stellvorrichtung für den Hydromotor anzusteuern.

Die bekannten hydrostatischen Antriebe und deren Steuerungen sind regelmäßig nicht in der Lage, eine maximal mögliche Bremsleistung umzusetzen oder sie bauen konstruktiv aufwändig auf und sind insoweit als Sonderlösungen für spezielle Einsatzzwecke anzusehen.

Im Hinblick auf die vorstehend genannte Problematik liegt der Erfindung die Aufgabe zugrunde, einen hydrostatischen Antrieb zu schaffen, der auf einfache Weise eine optimierte maximale Bremsleistung und zudem eine unabhängige Einbaulage ermöglicht.

Erfindungsgemäß ist diese Aufgabe durch einen hydrostatischen Antrieb mit den Merkmalen des Patentanspruches 1 in seiner Gesamtheit gelöst.

Dadurch, dass erfindungsgemäß ein dynamischer Stromteiler in der ersten Arbeitsleitung eingebaut ist, die im Vorwärtsfahrbetrieb die Rückflussleitung für Fluid von dem Hydromotor zu der Hydropumpe bildet und den Fluidstrom regelt, wobei auf beiden Stirnseiten eines Druckschiebers des Stromregelventils Druckkräfte wirken, die von der ersten Arbeitsleitung und von der zweiten Arbeitsleitung abgeleitet sind, kann ein maximal möglicher und für die Hydropumpe in einer Arbeitsstellung mit verringertem Kammervolumen vertretbarer Fluidstrom zugeführt werden. Der Fluidstrom überfordert die an die Hydropumpe angeflanschte Verbrennungskraftmaschine nicht im Sinne einer Überdrehzahl. Ein Druckregelventil ist dabei dem Stromteiler vorgelagert, wobei in dem Stromteiler der Rückstaudruck bei Schiebebetrieb mit der Kraft der Feder für den Druckschieber und dem Druck, der am Druckregelventil eingestellt wurde, verglichen wird. Der Druck in der zweiten Arbeitsleistung ist dabei nicht weiter zu beachten, da diese zur Saugleitung für den Hydromotor geworden ist und mit dem Speisedruck vorgespannt bleibt.

Bevorzugt wird der von der ersten Arbeitsleitung abgeleitete Druck einer mit einer Feder beaufschlagten Seite des Druckschiebers des Stromteilers zugeführt. Überschreitet der Druck in der ersten Arbeitsleitung den am Druckregelventil eingestellten Druck, geht der Stromteiler aus einer arretierten Position in eine Regelposition. Dabei wirkt die Kraftresultierende aus dem am Druckregelventil eingestellten Druckniveau der Feder. Es wird demnach der im Schiebebetrieb zusätzlich entstehende Fluidstrom, der einen Druckanstieg vor der Hydropumpe zur Folge hätte, bis zu der eingestellten Regelgrenze aus dem hydrostatischen Arbeitskreis über eine Entspannungsleitung abgeführt.

Es kann weiter vorteilhaft sein, das Druckregelventil eingangsseitig von einem höheren Druck in der ersten Arbeitsleitung oder der zweiten Arbeitsleitung anzusteuern, wobei in die beiden, den Druckgradienten abgreifenden Steuerleitungen, ein Wechselventil eingebaut ist.

Es kann ferner vorteilhaft sein, in die Entspannungsleitung ein Druckbegrenzungsventil einzubauen, mit dem zusätzlich der Lastdruck an der mit der Verbrennungskraftmaschine gekoppelten Hydropumpe einstellbar ist. Dies bewirkt eine zusätzliche Bremslast an dem jeweiligen Hydromotor und kann die Betriebsbremsen entlasten.

Die Entspannungsleitung kann in einen Fluidtank münden oder das überschüssige Fluid wird mit der Entspannungsleitung in die zweite Arbeitsleitung zurückgeführt. Beim Rückwärtsfahren ist der Stromteiler außer Funktion und mit einer Überbrückungsleitung an der ersten Arbeitsleitung überbrückt. In diese Überbrückungsleitung ist ein Rückschlagventil eingebaut, das bei einer Fließrichtung des Fluids bei Rückwärtsfahrt öffnet. Es wird dabei von der Annahme ausgegangen, dass die im Rückwärtsfahrbetrieb gefahrenen Geschwindigkeiten geringer sind und ebenso die benötigten Bremsmomente.

Anstelle des Rückschlagventils kann ein Schaltventil, insbesondere ein 3/2-Wegeventil in der Überbrückung des Stromteiler angeordnet sein, das bei einer Fahrtrichtungsumkehr den Stromteiler außer Betrieb setzt. Ferner ist mit dem 3/2-Wegeventil eine Ableitung von Fluid aus der ersten Arbeitsleitung möglich. In einem weiteren bevorzugten Ausführungsbeispiel ist ein Wechselventil vorgesehen, das fluidführend mit der zweiten Arbeitsleitung mit dem 3/2-Wegeventil derart verbunden ist, dass eine Ableitung von Fluid in Abhängigkeit von dem Druck in der zweiten Arbeitsleitung und der Schaltstellung des 3/2-Wegeventils in einen Fluidtank oder in die zweite Arbeitsleitung erfolgen kann.

An dem Wechselventil wird ein Wert für den Differenzdruck stromaufwärts des Stromteilers und in der zweiten Arbeitsleitung abgenommen und zur Ansteuerung des Stromteilers verwendet.

Nachstehend ist die Erfindung anhand von in der Zeichnung dargestellten Ausführungsbeispielen im Einzelnen erläutert. Dabei zeigen in prinzipieller und nicht maßstäblicher Darstellung:
- Fig. 1: ein Blockschaltbild für ein erstes Ausführungsbeispiel eines hydrostatischen Antriebs;
- Fig. 2: ein Blockschaltbild für ein zweites Ausführungsbeispiel eines hydrostatischen Antriebs und
- Fig. 3: einen schematischen Längsschnitt durch einen Stromteiler der hydrostatischen Antriebe gemäß den Darstellungen nach den Fig. 1 und 2.

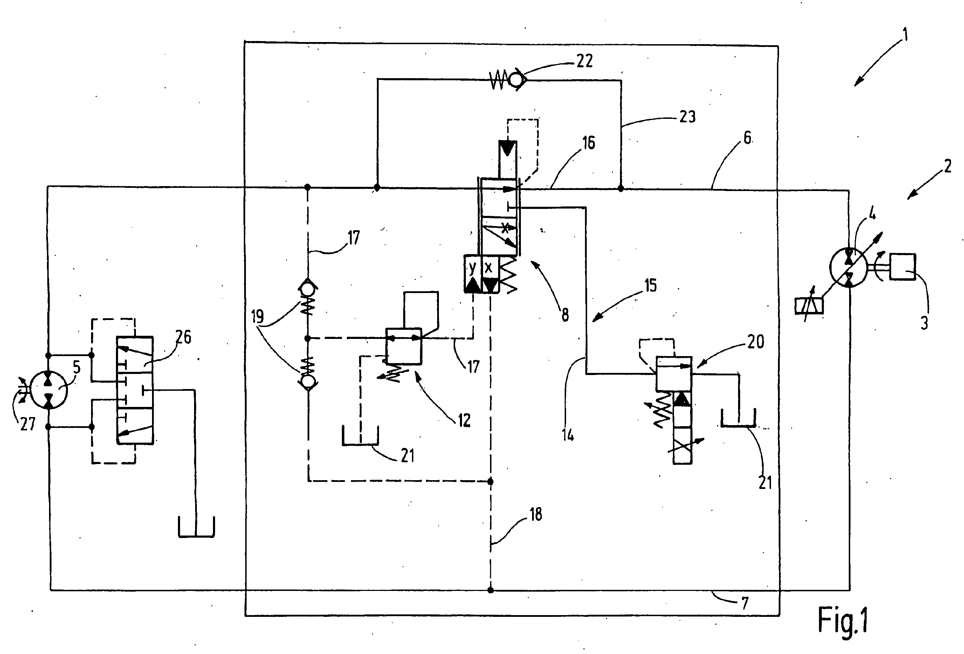

In der Fig. 1 ist in der Art eines Blockschaltbildes ein erstes Ausführungsbeispiel eines hydrostatischen Antriebs 1 für eine Arbeitsmaschine gezeigt. Neben dem Einsatz für eine Arbeitsmaschine, wie einen Bagger, Hebekran oder dergleichen, kann die aufgezeigte Lösung auch für sonstige Fahrzeuge eingesetzt werden, beispielsweise bei einem Personenbus. Der hydrostatische Antrieb 1 umfasst einen geschlossenen hydraulischen Kreislauf 2. Der geschlossene Kreislauf 2 umfasst neben einer Hydropumpe 4, die von einer Verbrennungskraftmaschine 3 angetrieben ist, eine erste Arbeitsleitung 6 und eine zweite Arbeitsleitung 7, die eine verstellbare Hydropumpe 4 mit einem Hydromotor 5 verbinden. Der Hydromotor 5 dient als Fahrmotor und ist von einem variablen Stelldruckventil 26 angesteuert, das die Fahrtrichtung und Fahrgeschwindigkeit steuert.

Die erste Arbeitsleitung 6 und die zweite Arbeitsleitung 7 leiten Druckmittel oder Fluid stets in entgegensetzten Richtungen, falls das Fördervolumen der Hydropumpe 4 von Null verschieden ist.

Die von dem Hydromotor 5 angetriebene Antriebswelle 27 kann anstatt mit einer Fahrzeugachse auch mit anderen bewegbaren Einheiten der Arbeitsmaschine verbunden sein, beispielsweise in Form hydraulisch betätigbarer Arbeitsgerätschaften, wie einer Baggerschaufel oder dergleichen.

In der ersten Arbeitsleitung 6 ist ein dynamischer Stromteiler 8 eingesetzt. Die beiden Stirnseiten 9, 10 eines Druckschiebers 11 des Stromteilers 8, sind dabei grundsätzlich von einer ersten Steuerleitung 17, die den Fluiddruck stromaufwärts zu dem Stromteiler 8 in der ersten Arbeitsleitung 6 repräsentiert und von einem über eine zweite Steuerleitung 18 übermittelten Fluiddruck in der zweiten Arbeitsleitung 7 angesteuert. Ferner ist in der ersten Steuerleitung 17 ein Druckregelventil 12 eingesetzt. Dem Druckregelventil 12 ist ein aus zwei gegenläufig wirkenden Rückschlagventilen gebildetes Wechselventil 19 vorgeschaltet. In den Figuren sind die Ansteuerleitungen für den Stromteiler mit X und Y bezeichnet. Ferner sind die Fluidanschlüsse und möglichen Fluidströme am Stromteiler 8 mit 1', 2' und 3' bezeichnet.

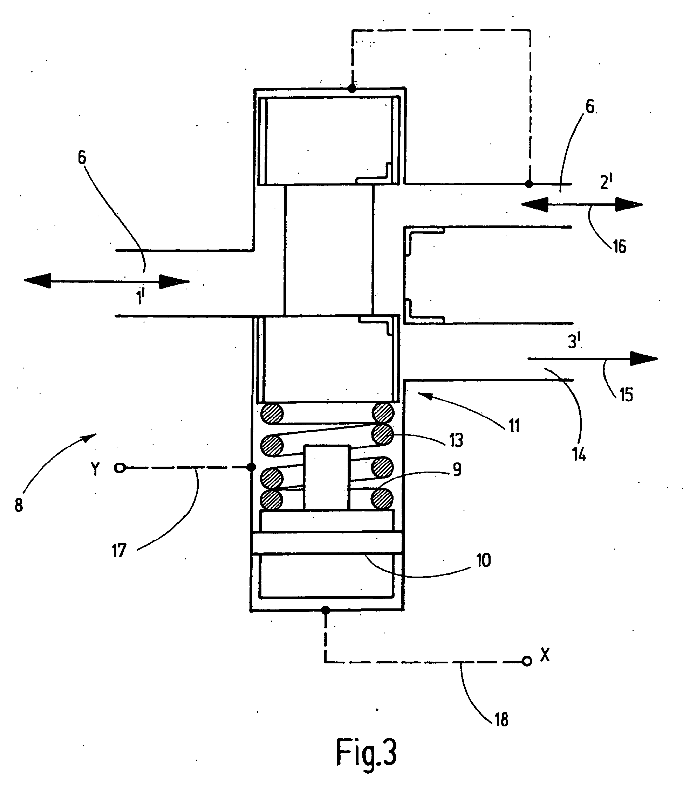

In einer Betriebssituation der hydraulischen Anlage oder des hydrostatischen Antriebs, in dem ein Schiebebetrieb herrscht, d. h. der Hydromotor 5 als Pumpe wirkt, ergibt sich ein Druckanstieg in der ersten Arbeitsleitung 6 in Richtung auf die Hydropumpe 4 zu. Dieser Druckanstieg wird auf den Stromteiler 8 über die erste Steuerleitung 17 gemeldet. Im Stromteiler 8 selbst wird der Rückstaudruck mit der Kraft einer Druckfeder 13 (vgl. Fig. 3) und dem Druck, der an dem Druckregelventil 12 eingestellt wurde, verglichen. Überschreitet der Druck in der ersten Arbeitsleitung 6 den am Druckregelventil 12 eingestellten Druck geht der Stromteiler 8 in eine Regeistellung über.

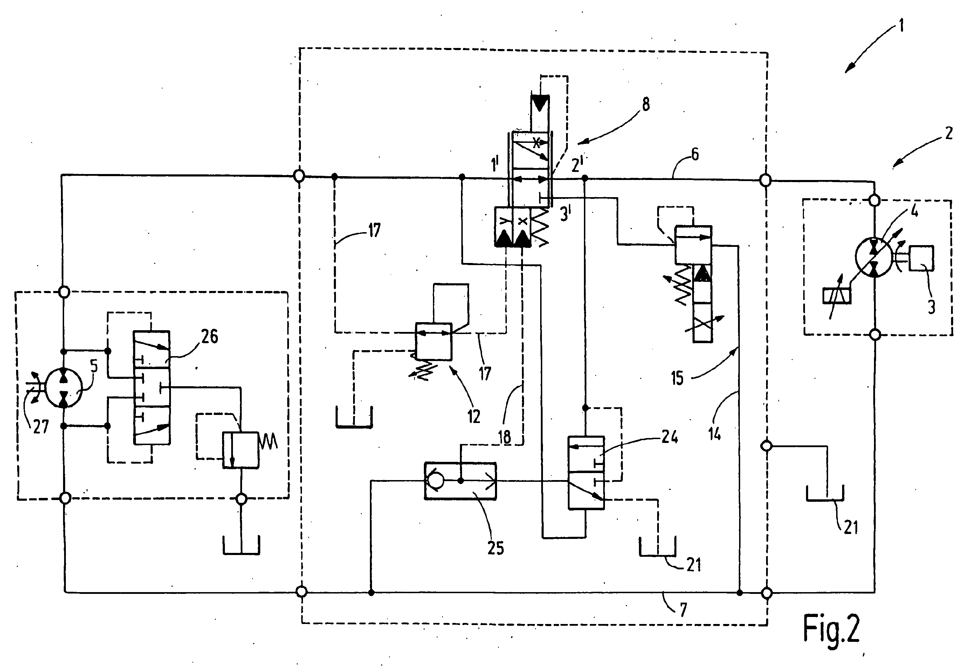

Damit gelten nur noch die Kraftresultierende aus der Druckfeder 13 und dem Druckniveau oberhalb des eingestellten Druckes auf der abgewandten Seite des Druckregelventils 12. Dieser Druckunterschied wird nun zur Regelung des Stromteilers 8 herangezogen. Der überschüssige Volumenstrom, der den Druckanstieg in der ersten Arbeitsleitung 6 zur Folge hätte, wird bis zu der gewählten Regelgrenze über eine Entspannungsleitung 14 aus dem Arbeitskreis entfernt. Die Verbrennungskraftmaschine 3 ist jetzt nur mit dem Drehmoment der Hydropumpe 4 des Restdruckes belastet und wird nicht mehr überdreht. Der Stromteiler 8 teilt den von dem Hydromotor in der ersten Arbeitsleitung 6 zur Hydropumpe 4 gelenkten Fluidstrom in einen in die Entspannungsleitung 14 abgeführten Fluidanteil und in einen Fluidanteil 16, der in der ersten Arbeitsleitung verbleibt, auf. Wie Fig. 2 des weiteren zeigt, kann der in die Entspannungsleitung 14 abgeleitete Fluidanteil 15 entweder in einen Fluidtank 21 oder in die zweite Arbeitsleitung 7 eingeleitet werden.

In die Entspannungsleitung 14 ist ein Druckbegrenzungsventil 20 eingesetzt, dessen Ansteuerverhalten variabel gehalten ist und mit dessen Hilfe zusätzlich der Lastdruck des Fahrmotors oder des Hydromotors 5 unabhängig voneinander angesteuert werden kann.

Die in den Fig. 1 und 2 gezeigten Ausführungsbeispiele zeigen eine elektromagnetische Ansteuerung des Druckbegrenzungsventils 20. In einem Rückwärtsfahrbetrieb ist der Stromteiler 8, wie die Fig. 1 zeigt, von einer Überbrückung 23 mit Rückschlagventil 22 umgangen. Die Überbrückung kann auch durch ein 3/2-Wegeventil 24, das vor und nach dem Stromteiler 8 in die erste Arbeitsleitung 6 eingebunden ist, realisiert sein. Ein Wechselventil 25, das sowohl mit dem 3/2-Wegeventil 24, als auch mit der zweiten Arbeitsleitung 7 in fluidführender Verbindung ist, kann ebenso zur Ansteuerung des Stromteilers 8, insbesondere bei der Rückwärtsfahrt, im Sinne einer verriegelten Position des Druckschiebers 11 des Stromteilers 8 dienen.

## Patentansprüche

1. Hydrostatischer Antrieb mit einem geschlossenen Kreislauf (2), welcher mindestens eine verstellbare, von einer Verbrennungskraftmaschine (3) angetriebene Hydropumpe (4) und mindestens einen Hydromotor (5), sowie eine erste Arbeitsleitung (6) und eine zweite Arbeitsleitung (7) aufweist, wobei die erste und die zweite Arbeitsleitung (6, 7) jeweils die Hydropumpe (4) und den Hydromotor (5) miteinander verbinden, wobei ein in die erste Arbeitsleitung (6) eingebauter dynamischer Stromteiler (8) den Fluidstrom in der ersten Arbeitsleitung (6) regelt, die im Vorwärtsfahrbetrieb die Rückflussleitung für Fluid von dem Hydromotor (5) zu der Hydropumpe (4) darstellt, **dadurch gekennzeichnet, dass** auf zwei gegenüberliegenden Stirnseiten (9, 10) eines Druckschiebers (11) des Stromteilers (8) Druckkräfte einwirken, die von der ersten Arbeitsleitung (6) und von der zweiten Arbeitsleitung (7) abgeleitet sind.

2. Hydrostatischer Antrieb nach Anspruch 1, **dadurch gekennzeichnet, dass** die Druckkraft, die von der ersten Arbeitsleitung (6) auf den Stromteiler (8) abgeleitet ist, von einem Druckregelventil (12) vorgegeben ist.

3. Hydrostatischer Antrieb nach Anspruch 1 oder 2, **dadurch gekennzeichnet, dass** die Druckkraft, die von der ersten Arbeitsleitung (6) abgeleitet ist, auf eine Stirnseite (9) des Druckschiebers (11) wirkt, der von einer Druckfeder (13) belastet ist.

4. Hydrostatischer Antrieb nach einem der Ansprüche 1 bis 3, **dadurch gekennzeichnet, dass** bei Überschreiten des Fluiddrucks in der ersten Arbeitsleitung (6) von einem in dem Druckregelventil (12) eingestellten Druck bei einem Bremsvorgang der Stromteiler (8) in eine Regelposition übergeht, in der der Fluidstrom durch den Stromteilers (8) aufgeteilt wird, in einen, in eine Entspannungsleitung (14) abgeführten Anteil (15) und in einen weiteren Rückflussanteil (16) zu der Hydropumpe (4).

5. Hydrostatischer Antrieb nach Anspruch 4, **dadurch gekennzeichnet, dass** das Druckregelventil (12) eingangsseitig von einem höheren Druck in der ersten Arbeitsleitung (6) oder der zweiten Arbeitsleitung (7) angesteuert ist, wobei in die beiden Steuerleitungen (17, 18) ein Wechselventil (19) eingesetzt ist.

6. Hydrostatischer Antrieb nach einem der Ansprüche 1 bis 5, **dadurch gekennzeichnet, dass** in der Entspannungsleitung (14) ein Druckbegrenzungsventil (20) angeordnet ist, mit dem zusätzlich der Lastdruck an der Verbrennungskraftmaschine (3) einstellbar ist.

7. Hydrostatischer Antrieb nach einem der Ansprüche 1 bis 6, **dadurch gekennzeichnet, dass** die Entspannungsleitung (14) in einen Fluidtank (21) mündet.

8. Hydrostatischer Antrieb nach einem der Ansprüche 1 bis 7, **dadurch gekennzeichnet, dass** die Entspannungsleitung (14) in die zweite Arbeitsleitung (7) mündet.

9. Hydrostatischer Antrieb nach einem der Ansprüche 1 bis 8, **dadurch gekennzeichnet, dass** ein Rückschlagventil (22) in einer Überbrückung (23) des dynamischen Stromteilers (8) in der ersten Arbeitsleitung (6) angeordnet ist, das bei einer Fahrtrichtungsumkehr den Stromteiler (8) außer Funktion bringt.

10. Hydrostatischer Antrieb nach einem der Ansprüche 1 bis 8, **dadurch gekennzeichnet, dass** ein 3/2-Wegeventil (24) in der Überbrückung (23) des dynamischen Stromteilers (8) in der ersten Arbeitsleitung (6) angeordnet ist, das bei einer Fahrtrichtungsumkehr den Stromteiler (8) außer Funktion bringt.

11. Hydrostatischer Antrieb nach Anspruch 10, **dadurch gekennzeichnet, dass** das 3/2-Wegeventil (24) eine Ableitung von Fluid aus der ersten Arbeitsleitung (6) ermöglicht.

12. Hydrostatischer Antrieb nach Anspruch 11, **dadurch gekennzeichnet, dass** an einem Wechselventil (25), das mit dem 3/2-Wegeventil (24) und mit der zweiten Arbeitsleitung (7) verbunden ist, ein Steuersignal für die Ansteuerung des dynamischen Stromteilers (8) abgegriffen wird, und in Abhängigkeit von dem Druck in der zweiten Arbeitsleitung (7) und der Schaltstellung des 3/2-Wegeventils (24) eine Ableitung von Fluid in den Fluidtank (21) oder in die zweite Arbeitsleitung (7) erfolgt.

## Claims

1. A hydrostatic drive that has a closed circuit (2) which has at least one adjustable hydraulic pump (4) driven by an internal combustion engine (3) and at least one hydraulic motor (5), as well as a first working line (6) and a second working line (7), the first and the second working line (6, 7) respectively connecting the hydraulic pump (4) and the hydraulic motor (5) to one another, a dynamic flow divider (8) built into the first working line (6) regulating the fluid flow in the first working line (6) which in forwards travel operation constitutes the return line for fluid from the hydraulic motor (5) to the hydraulic pump (4), **characterised in that** compressive forces act on two opposing face sides (9, 10) of a pressure slider (11) of the flow divider (8), which compressive forces are diverted from the first working line (6) and from the second working line (7).

2. The hydrostatic drive according to Claim 1, **characterised in that** the compressive force which is diverted from the first working line (6) to the flow divider (8) is predetermined by a pressure regulating valve (12).

3. The hydrostatic drive according to Claim 1 or 2, **characterised in that** the compressive force which is diverted from the first work line (6) acts on a face side (9) of the pressure slider (11) which is loaded by a compression spring (13).

4. The hydrostatic drive according to any of Claims 1 to 3, **characterised in that** when the fluid pressure in the first working line (6) is exceeded by a pressure set in the pressure regulating valve (12) during a braking procedure, the flow divider (8) passes into a regulating position in which the fluid flow is divided by the flow divider (8) into a portion (15) discharged into a relief line (14) and into a further return portion (16) to the hydraulic pump (4).

5. The hydrostatic drive according to Claim 4, **characterised in that** the pressure regulating valve (12) is actuated on the input side by a higher pressure in the first working line (6) or the second working line (7), a shuttle valve (19) being inserted into the two control lines (17, 18).

6. The hydrostatic drive according to any of Claims 1 to 5, **characterised in that** there is disposed in the relief line (14) a pressure limiting valve (20) with which the load pressure can additionally be set on the internal combustion engine (3).

7. The hydrostatic drive according to any of Claims 1 to 6, **characterised in that** the relief line (14) opens out into a fluid tank (21).

8. The hydrostatic drive according to any of Claims 1 to 7, **characterised in that** the relief line (14) opens out into the second working line (7).

9. The hydrostatic drive according to any of Claims 1 to 8, **characterised in that** a check valve (22) is disposed in a bypass (23) of the dynamic flow divider (8) in the first working line (6), which valve makes the flow divider (8) inoperable if there is a reverse in direction of travel.

10. The hydrostatic drive according to any of Claims 1 to 8, **characterised in that** a 3/2-way valve (24) is disposed in the bypass (23) of the dynamic flow divider (8) in the first working line (6), which valve makes the flow divider (8) inoperable if there is a reverse in direction of travel.

11. The hydrostatic drive according to Claim 10, **characterised in that** the 3/2-way valve (24) makes it possible to divert fluid out of the first working line (6).

12. The hydrostatic drive according to Claim 11, **characterised in that** a control signal for actuating the dynamic flow divider (8) is tapped onto a shuttle valve (25) that is connected to the 3/2-way valve (24) and to the second working line (7), and fluid is discharged into the fluid tank (21) or into the second working line (7) depending on the pressure in the second working line (7) and the switching position of the 3/2-way valve (24).

## Revendications

1. Entraînement hydrostatique ayant un circuit (2) fermé, qui a au moins une pompe (4) hydraulique réglable entraînée par une machine (3) à combustion interne et au moins un moteur (5) hydraulique, ainsi qu'un premier conduit (6) de travail et un deuxième conduit (7) de travail mettant en communication respectivement la pompe (4) hydraulique et le moteur (5) hydraulique, dans lequel un diviseur (8) de courant dynamique inséré dans le premier conduit (6) de travail régule le courant de fluide dans le premier conduit (6) de travail, qui, dans le fonctionnement en marche avant, représente le conduit de retour du fluide du moteur (5) hydraulique à la pompe (4) hydraulique, **caractérisé en ce que**, sur deux côtés (9, 10) frontaux opposés d'un tiroir (11) manométrique du diviseur (8) de courant, agissent des forces de pression, qui proviennent du premier conduit (6) de travail et du deuxième conduit (7) de travail.

2. Entraînement hydrostatique suivant la revendication 1, **caractérisé en ce que** la force de pression, qui est dérivé du premier conduit (6) de travail sur le diviseur (8) de courant, est donnée à l'avance par une vanne (12) de réglage de la pression.

3. Entraînement hydrostatique suivant la revendication 1 ou 2, **caractérisé en ce que** la force de pression, qui est dérivé du premier conduit (6) de travail, agit sur un côté (9) frontal du tiroir (11) manométrique, qui est soumis à un ressort (13) de compression.

4. Entraînement hydrostatique suivant l'une des revendications 1 à 3, **caractérisé en ce que**, si la pression du fluide dans le premier conduit (6) de travail dépasse une pression réglée par la vanne (12) de réglage de la pression, le diviseur (8) de courant passe, dans une opération de freinage dans une position de réglage, dans laquelle le courant de fluide est divisé par le diviseur (8) de courant en une partie (15) évacuée dans un conduit (14) de détente et en une autre partie (16) de retour allant à la pompe (4) hydraulique.

5. Entraînement hydrostatique suivant la revendication 4, **caractérisé en ce que** la vanne (12) de réglage de la pression est commandée, du côté de l'entrée, par une pression assez haute dans le premier conduit (6) de travail ou dans le deuxième conduit (7) de travail, un sélecteur (19) de courant étant inséré dans les deux conduits (17, 18) de commande.

6. Entraînement hydrostatique suivant l'une des revendications 1 à 5, **caractérisé en ce que**, dans le conduit (14) de détente, est montée une soupape (20) de limitation de la pression, par laquelle la pression de charge sur la machine (3) à combustion interne peut, en outre, être réglée.

7. Entraînement hydrostatique suivant l'une des revendications 1 à 6, **caractérisé en ce que** le conduit (14) de détente débouche dans un réservoir (21) à fluide.

8. Entraînement hydrostatique suivant l'une des revendications 1 à 7, **caractérisé en ce que** le conduit (14) de détente débouche dans le deuxième conduit (7) de travail.

9. Entraînement hydrostatique suivant l'une des revendications 1 à 8, **caractérisé en ce qu'**un clapet antiretour (22) est monté dans une dérivation (23) du diviseur (8) de courant dynamique du premier conduit (6) de travail, lequel, lors d'une marche en sens contraire, met le diviseur (8) de courant hors de fonctionnement.

10. Entraînement hydrostatique suivant l'une des revendications 1 à 8, **caractérisé en ce qu'**une vanne (24) à 3/2 voies dans la dérivation (23) du diviseur (8) de courant dynamique est montée dans le premier conduit (6) de travail et met, dans le cas d'une marche en sens contraire, le diviseur (8) de courant hors de fonctionnement.

11. Entraînement hydrostatique suivant la revendication 10, **caractérisé en ce que** la vanne (24) à 3/2 voies permet de dériver du fluide du premier conduit (6) de travail.

12. Entraînement hydrostatique suivant la revendication 11, **caractérisé en ce que**, sur un sélecteur (25) de courant, qui communique avec la vanne (24) à 3/2 voies et avec le deuxième conduit (7) de travail, est prélevé un signal de commande du diviseur (8) de courant dynamique et, en fonction de la pression dans le deuxième conduit (7) de travail et de la position de commutation de la vanne (24) à 3/2 voies, il s'effectue une dérivation de fluide dans le réservoir (21) à fluide ou dans le deuxième conduit (7) de travail.
